Europäisches Patentamt

European Patent Office

Office européen des brevets

(19)

(11) Veröffentlichungsnummer: **0 305 359**
**B1**

(12) **EUROPÄISCHE PATENTSCHRIFT**

(45) Veröffentlichungstag der Patentschrift: **12.09.90**

(51) Int. Cl.⁵: **G 01 F 1/68**

(21) Anmeldenummer: **87900655.9**

(22) Anmeldetag: **16.01.87**

(86) Internationale Anmeldenummer:
**PCT/DE87/00020**

(87) Internationale Veröffentlichungsnummer:
**WO 87/07016 19.11.87 Gazette 87/25**

(54) **VERFAHREN UND SCHALTUNGSANORDNUNG ZUM MESSEN DES LUFTDURCHSATZES IM ANSAUGROHR EINER BRENNKRAFTMASCHINE.**

(30) Priorität: **09.05.86 DE 3615628**

(43) Veröffentlichungstag der Anmeldung:
**08.03.89 Patentblatt 89/10**

(45) Bekanntmachung des Hinweises auf die Patenterteilung:
**12.09.90 Patentblatt 90/37**

(84) Benannte Vertragsstaaten:
**DE FR GB IT**

(56) Entgegenhaltungen:
**EP-A-0 162 293**
**DE-B-2 843 143**
**US-A-3 470 388**
**US-A-4 043 196**
**US-A-4 089 214**

**Patent Abstracts of Japan, Band 8, Nr. 169, (P-292)(1606), 4, August 1984 & JP-A-5965720
I.S.A. Transactions, Band 21, Nr. 1, 1982, (Triangle Park, NC, USA), J.K. Eaton et al., "Two new instruments for flow direction and skin-friction measurements in separated Flows", Seiten 69-78**

(73) Patentinhaber: **ROBERT BOSCH GMBH
Postfach 50
D-7000 Stuttgart 1 (DE)**

(72) Erfinder: **KLEINHANS, Josef
Markgröningerstr. 69
D-7140 Ludwigsburg (DE)**
Erfinder: **KIENZLE, Wolfgang
Schlossgartenstr. 18
D-7254 Hemmingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

### Stand der Technik

Die Erfindung geht aus von einem Verfahren und einer Schaltungsanordnung zum Messen des Luftdurchsatzes im Ansaugrohr einer Brennkraftmaschine nach der Gattung des Hauptanspruchs (bzw. des Anspruchs 4). Derartige aus US—A—4,283,944 bekannte Verfahren und Schaltungsanordnungen stellen an der Brückendiagonale der Meßbrücke ein analoges Signal für weitere Auswerte- und Steuerzwecke zur Verfügung. Analogsignale lassen sich jedoch nicht ohne weiteres mittels der heute vielfach zur Steuerung von Brennkraftmaschinen eingesetzten Digitalsteuergeräten verwerten. Weiter ist bei den bekannten Verfahren und Einrichtungen zur Messung des Luftdurchsatzes das Strömmungsmeßorgan ständig mit der Betriebsspannungsquelle, bzw. einer Referenzspannungsquelle verbunden. Dies hat sich in bestimmten Anwendungsfällen als unzulänglich erwiesen, da besondere Wärmeabfuhr-Probleme zu beherrschen sind.

Bei einer weiteren bekannten Einrichtung zum Messen des Luftdurchsatzes DE—A—2 448 304.3 wird ein temperaturabhängiger Widerstand dauernd von einem Gleichstromanteil durchflossen, dem zusätzlich ein sich in seiner Höhe periodisch ändernder Stromanteil überlagert ist. Dieser Stromanteil wird dam temperaturabhängigen Widerstand über einen Leistungshalbleiter zugeführt. Der ständig vorhandene Gleichstromanteil führt auch hierbei zu einer unerwünschten Verlustleistung. Zur Erzeugung einer für die Spannungs-Frequenz-Umwandlung geeigneten Eingangsspannung muß zur Glättung der der Meßbrücke zugeführten getakteten Spannungsteile noch ein Integrator vorgesehen werden, der wegen der relativ hohen Integratorzeitkonstante für das dyanmische Verhalten des Meßsystems abträglich ist.

### Vorteile der Erfindung

Das erfindungsgemäße Verfahren und die dazu gehörende Schaltungsanordnung zum Messen des Luftdurchsatzes im Ansaugrohr einer Brennkraftmaschine haben gegenüber bekannten Verfahren und Schaltungsanordnungen den Vorteil einer unmittelbaren Verwertbarkeit des in Form einer Frequenz vorliegenden Ausgangssignals in einem in Digitaltechnik ausgeführten Steuergerät, so daß sich weitere Wandlerschaltungen zur Umwandlung des Analogsignals in digitale Form erübrigen.

Durch die taktmäßige Betriebsweise des Strömungsmeßorgans ergibt sich im Vergleich zum Analogbetrieb weiter eine wesentlich verringerte thermische Belastung, so daß auch kritische Wärmeabfuhrprobleme in der Praxis basser beherrschbar sind.

Weitere Vorteile der Erfindung ergeben sich in Verbindung mit den abhängigen Patentansprüchen aus der nachfolgenden Beschreibung von Ausführungsbeispielen.

### Zeichnung

Ausführungsbeispiele der Erfindung sind in der Zeichnung dargestellt und werden im folgenden näher beschrieben und erläutert.

Es zeigen Figur 1 ein Übersichtsschaubild (Blockschaltbild) einer Schaltungsanordnung zur Durchführung des Verfahrens, Figur 2 ein weiteres Ausführungsbeispiel der Schaltungsanordnung mit Umschaltmöglichkeit für unterschiedliche Zeitglieder einer monostabilen Kippstufe und Figure 3 ein Diagramm zur Erläuterung der geringeren thermische Belastung bei Taktbetrieb des Strömungsmeßorgans.

### Beschreibung der Ausführungsbeispiele

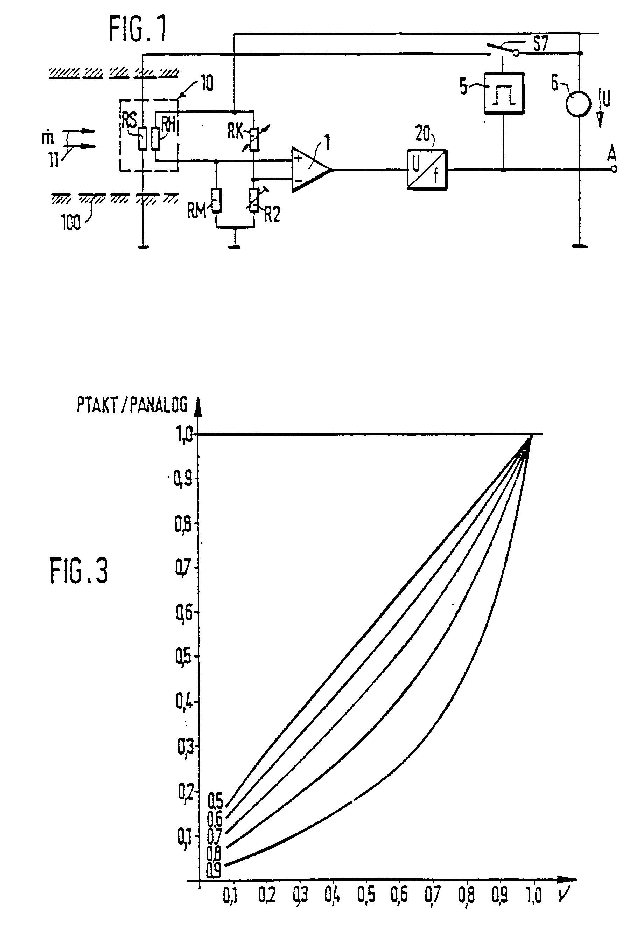

Figur 1 zeigt eine als Blockschaltbild dargestellte erste Schaltungsanordnung zur Durchführung des erfindungsgemäßen Verfahrens.

Das Strömungsmeßorgan besteht aus einem Hitzdraht oder einem Heizfilm RS, der in dem lediglich schematisch angedeut dargestellten Ansaugrohr 100 einer Brennkraftmaschine angeordnet ist und aus Richtung der Pfeile 11 mit der Luftmasse ṁ angeströmt wird und vermittels eines Schalters S7 mit der Betriebsspannungsquelle 6 verbindbar ist. Das Strömungsmeßorgan RS ist thermisch mit einem hochohmigen temperaturabhängigen Widerstand RH gekoppelt, der in einem Brückenzweig einer Meßbrücke RH, RK, RM, R2 liegt. Die Meßbrücke wird von der Betriebsspannungsquelle 6 mit einer möglichst konstanten Spannung U gespeist. Je ein Punkt der Brückendiagonale ist mit dem invertierenden, bzw. nicht invertierenden Eingangsanschluß eines Operationsverstärkes 1 verbunden, der die Diagonalspannung der Meßbrücke verstärkt. Auf den Operationsverstärker 1 folgt ein Spannungs- Frequenzwandler 20, der die durch den Operationsverstärker 1 verstärke Diagonalspannung der Meßbrücke in eine spannungsproportionale Frequenz umwandelt. Am Ausgang A des Spannungs-Frequenzwandlers steht somit eine den thermischen Zustand des Strömungsmeßorgans kennzeichnende Frequenz zur Verfügung, die auf einfache Weise mit in Digitaltechnik ausgelegten Steuergeräten weiter verarbeitbar ist.

Mit 5 ist eine monostabile Kippstufe (Monovibrator) bezeichnet, die im Einschaltzustand den Schalter S7 betätigt, der die Betriebsspannungsquelle 6 mit dem Strömungsmeßorgan RS verbindet, so daß dieses von Strom durchflossen und aufgeheizt wird.

Die im Ansaugrohr 100 aus Richtung des Pfeils 11 anströmende Luftmenge ṁ führt zu einer Abkühlung des Strömungsmeßorgans, so daß durch Temperaturmessung, bzw. Steuerung der Energiezufuhr auf die anströmende Luftmenge geschlossen werden kann.

Der Operationsverstärker 1 regelt den zuvor erläuterten rückgekoppelten Kreis so, daß seine Eingangsspannung möglichst den Wert O annimmt. Hieraus ergeben sich die folgenden Beziehungen.

Für die im Gleichgewicht befindliche Meßbrücke gilt:

$$(1) \qquad RH = \frac{RK}{R2} \cdot RM$$

Für RH gilt dabei

$$(2) \qquad RH = RHO\,(1 + \alpha H \cdot TH)$$

Die Übertemperatur TH des Temperaturfühlers RH ist im stationären Fall gleich der Übertemperatur des Strömungsmeßorgans RS, für dessen Temperaturabhängigkeit die nachfolgende Beziehung gilt:

$$(3) \qquad RS = RSO\,(1 + \alpha S \cdot TS)$$

Das Strömungsmeßorgan RS wird durch Spannungsimpulse aufgeheizt, die ihm jeweils in geschlossener Stellung des Schalters 7, der von der monostable Kippstufe 5 betätigt wird, von der Spannungsquelle 6 zugeleitet werden und durch die ihn anströmende Luft m gekühlt.

Im stationären Fall gilt nach der King'schen Formel für die Energiebilanz

$$(4) \qquad \overline{PE} = \frac{1}{T} \int_{o}^{TM} \frac{U^2 const.}{RS}\, dt$$

oder

$$(5) \qquad \overline{PE} = g \cdot (\dot{m})\, TS$$

In (4) bedeutet $\overline{PE}$ den Mittelwert, der im stationären Fall in RS umgesetzten elektrischen Leistung. In (5) entspricht $\overline{PE}$ dem Mittelwert der durch die Luft abgeführten Wärmeleistung. Aufgrund des Verhaltens des Regelkreises gilt;

$$(6) \qquad RH = \frac{RK}{R2} \cdot RM = const.$$

Daraus ergibt sich:

$$(7) \qquad TH = const.$$

und

$$(8) \qquad TS = TH = const.$$

sowie

$$(9) \qquad RS = const.$$

Daraus ergibt sich wiederum:

$$(10) \qquad \frac{TM}{T} \cdot \frac{U^2 const.}{RS} = g\,(\dot{m}) \cdot TS$$

Mit der Beziehung

$$(11) \qquad T = \frac{1}{f}$$

gilt somit:

$$(12) \qquad f \cdot TM \cdot \frac{U^2 const.}{RS} = g\,(\dot{m}) \cdot TS$$

3

beziehungsweise

$$(13) \qquad f = \frac{1}{TM} \cdot \frac{U^2const.}{RS} \cdot TS \cdot g(\dot{m}) = k \cdot g(\dot{m})$$

Das heißt also, daß die vom Spannungs-Frequenz-Wandler 20 abgegebene Ausgangsfrequenz f ein Maß für die durch das Ansaugrohr 100 strömende Luftmasse ist.

Bei Triggerung der monostabilen Kippstufe 5 mittels der Ausgangsfrequenz f des Spannungs-Frequenzwandlers 20 und dementsprechendes taktgesteuertes Einschalten des Schalters 7 gilt für das Tastverhältnis:

$$(14) \qquad \gamma = \frac{TM}{T} = f \cdot TM$$

Am Strömungsmeßorgan RS wird die mittlere Leistung

$$(15) \qquad PE = \gamma \cdot \frac{U^2const.}{RS}$$

Am Brückenwiderstand RH die Leistung

$$(16) \qquad PH = PGES - \overline{PE} = \gamma \cdot UB \cdot \frac{Uconst.}{RS} - \gamma \frac{U^2const.}{RS}$$

$$= \gamma \cdot \frac{Uconst.}{RS} \quad (UB - Unconst.)$$

umgesetzt.

Im Falle der analogen Betriebsweise des Strömungsmeßorgans gilt folgende Leistungsbetrachtung unter Berücksichtigung der an RS anliegenden Spannung US.

Leistung am Strömungsmeßorgan

$$(17) \qquad PE = \frac{(US)^2}{RS}$$

Für die Leistung an RH gilt:

$$(18) \qquad PH = PGES - PE$$

$$= \frac{UB \cdot US}{RS} - \frac{(US)^2}{RS}$$

$$= \frac{US}{RS} \quad (UB - US)$$

In beiden oben betrachteten Fällen muß bei gleicher Temperatur TS der Widerstand des Strömungsmeßorgans RS gleich sein. Gleichzeitig muß die dem Strömungsmeßorgan zugeführte elektrische Leistung in beiden Fällen übereinstimmen. Daraus ergibt sich folgende Beziehung:

$$(19) \qquad \frac{(US)^2}{RS} = \gamma \cdot \frac{U^2const.}{RS}$$

bzw.

$$und \quad (20) \qquad S = \sqrt{\gamma} \cdot Uconst.$$

EP 0 305 359 B1

Für das Verhältnis der am Widerstand RH entstehenden Verlustleistungen in beiden oben betrachteten Fällen gilt damit:

$$(21) \quad \frac{PH \, (Frequenz)}{PH \, (analog)} = \frac{\gamma \cdot Uconst.}{RS} \cdot \frac{(UB - Uconst.)}{(US \, (UB - US)} \cdot RS$$

$$= \frac{\gamma \cdot Uconst. \, (UB - Unconst.)}{\sqrt{\gamma} \cdot Unconst. \, (UB - \sqrt{\gamma} Uconst.)}$$

$$= \sqrt{\gamma} \cdot \frac{UB - Unconst.}{UB - \sqrt{\gamma} \cdot Uconst.}$$

Für

$$(22) \quad Unconst. > US$$

ist die im taktgesteuerten Betrieb in RH umgesetzte Leistung immer kleiner als im Analogbetrieb. Dies gilt insbesondere auch bei kleinen Durchflußraten und damit einhergehender schlechter Kühlwirkung, so daß der taktgesteuerte Betrieb des Strömungsmeßorgans 10 ganz besondere Vorteile bietet.

Diese Verhältnisse lassen sich auch ganz deutlich anhand des Kurvenverlaufs des Diagramms nach Figur 3 ablesen, in dem das Leistungsverhältnis zwischen taktgesteuertem und analogem. Betrieb in Abhängigkeit vom Tastverhältnis γ mit UR/UB als Parameter dargestellt ist. Darin bedeuten UR = Konstantregelspannung und UB die Versorgungspannung.

Die dem Widerstand RS zugeführte Spannung Uconst. sollte aus Verlustleistungsgründen so hoch wie möglich gewählt werden.

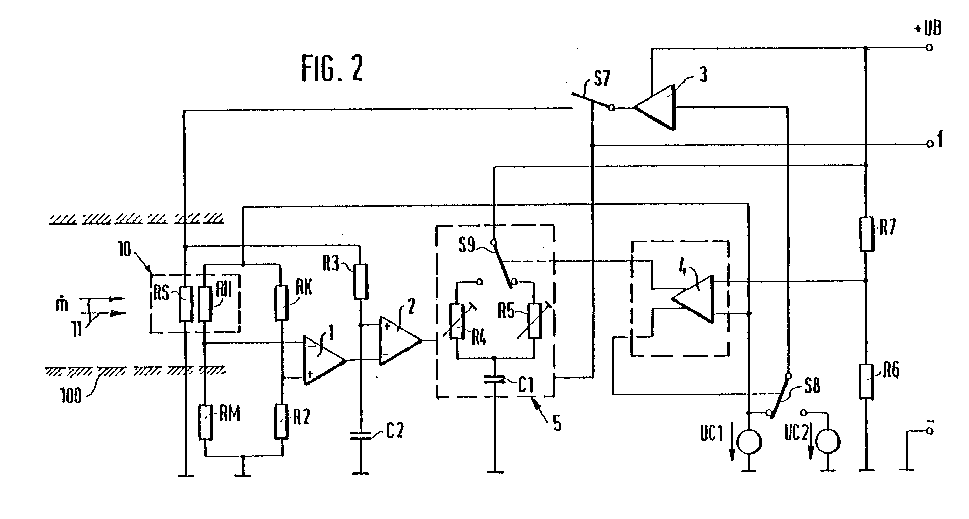

Bei niedriger Batteriespannung UB reicht jedoch die Spannung bei großem Luftmassendurchsatz nicht mehr aus. Als Ausweg wird bei niedriger Batteriespannung UB der Widerstand RS mit einer anderen Konstantspannung getaktet als bei ausreichend hoher Batteriespannung. Um das Entstehen eines die Weiterverarbeitung der Meßsignale erschwerenden Kennlinienknicks bei der Umschaltung der Konstantspanungen zu verhindern, muß die in RS umgesetzte getaktete Leistung in beiden vorstehend diskutierten Fällen gleich groß sein. Dies wird in vorteilhafter Weiterbildung der Erfindung durch eine entsprechende Umschaltung der Einschaltdauer der monostabilen Kippstufe 5 erreicht. Eine dafür geeignete Schaltungsanordnung ist in Figur 2 dargestellt. Es gelten folgende Beziehungen:

$$(23) \quad \text{Für Uconst.} = UC1 \text{ soll } TM = TM1 \text{ sein.}$$

$$(24) \quad \text{Für Uconst.} = UC2 \text{ soll } TM = TM2 \text{ sein.}$$

Für die Leistung an RS ergibt sich daraus:

$$(25) \quad \overline{PE} = f \cdot TM \cdot \frac{U^2const.}{RS} = const.$$

Daraus ergibt sich mit (23) bzw. (24):

$$(26) \quad f \cdot TM1 \cdot \frac{(UC1)^2}{RS} = f \cdot TM2 \cdot \frac{(UC2)^2}{RS}$$

bzw.

$$(27) \quad \frac{TM1}{TM2} = \frac{(UC2)^2}{(UC1)^2}$$

Eine für die Umschaltung der Konstantspannung geeignete Schaltungsanordnung ist in Figur 2 dargestellt. Sie entspricht in ihrem linken Teil im wesentlichen der in Figur 1 dargestellten Schaltungsanordnung. Zusätzlich verfügt sie über Mittel, die in der Lage sind., Spannungsschwankungen insbesondere eine zu niedrige Batteriespannung, festzustellen und dann zur Versorgung von RS zwischen zwei unterschiedlichen Konstantspannungen UC1, bzw. UC2 umzuschalten. Diese Mittel umfassen einen

5

Komparator 4 und einen Schalter S8. Schalter S7, der RS mit der Konstantspannung UC1 oder UC2 verbindet, wird wiederum von der monostabilen Kippstufe 5 betätigt. Erforderlichenfalls wird zwischen RS und den Spannungsquellen UC1 bzs. UC2 ein Leistungsverstärker 3 eingeschaltet.

Um einen Kennlinienknick infolge Umschaltung zwischen den beiden Konstantspannungen UC1 und UC2 zu vermeiden, der die Auswertung der Meßergebnisse unnötigerweise erschweren würde, ist dafür Sorge getragen, daß in RS auch bei Wechsel der Spannungsquellen stets die gleiche elektrische Leistung umgesetzt wird. Auf einfache Weise wird dies dadurch bewerkstelligt, daß umschaltbare Zeitglieder vorgesehen sind, die das Schaltverhalten der monostabilen Kippstufe 5 beeinflussen. Diese Zeitglieder bestehen, wie in Figur 2 angedeutet, aus einem Kondensator C1 und zwei unterschiedlichen Stellwiderständen R4, bzw. R5, die jeweils durch den Schalter S9 einschaltbar sind, der ebenfalls vom Komparator (4) betätigt wird. Figur 3 zeigt wie bereits erwähnt, ein Diagramm zur Erläuterung der geringeren thermischen Belastung bei Taktbetrieb des Strömungsmeßorgans.

In dem Diagramm ist das Leistungsverhältnis PTAKT/PANALOG in Abhängigkeit von Tastverhältnis γ mit dem Quotienten UR/UB als Parameter eingetragen. UR bedeutet darin die dem Strömungsmeßorgan zugeführte Konstantregelspannung und UB die Versorgungsspannung.

**Patentansprüche**

1. Verfahren zur Messung des Luftdurchsatzes im Ansaugrohr (100) einer Brennkraftmaschine mit einem richtungsunempfindlichen Strömungsmeßorgan (RS), insbesondere Hitzdraht oder Heizfilm, das thermisch mit einem Brückenzweig (RH) einer (Widerstands-) Meßbrücke (RH, RM, RK, R2) gekoppelt ist und wobei das Strömungsmeßorgan (RS) durch einen Schalter (7) mit einer Betriebsspannung (U) verbindbar ist, dadurch gekennzeichnet, daß die Diagonalspannung der Brückenschaltung für weitere Auswertungsschritte in eine der Spannung entsprechende Frequenz umgewandelt wird, und daß das Strömungsmeßorgan (RS) dieser Frequenz entsprechend taktweise mit der Betriebsspannung (U) verbunden wird.

2. Verfahren nach Anspruch 1, dadurch gekennzeichnet, daß die Diagonalspannung der Meßbrücke verstärkt wird, daß die verstärkte Spannung einem Spannungs-Frequenzwandler zugeführt wird, und daß mit dessen Ausgangssignal eine monostabile Kippstufe angesteuert wird, die einen das Strömungsmeßorgan mit der Spannungsquelle verbindenden Schalter betätigt.

3. Verfahren nach einem der Ansprüche 1 und 2, dadurch gekennzeichnet, daß zur Bestimmung des Einschaltverhaltens der monostabilen Kippstufe unterschiedliche Zeitglieder vorgesehen sind, die abhängig von der Höhe der Betriebsspannung einschaltbar sind.

4. Schaltungsanordnung zur Durchführung des Verfahrens nach einem der Ansprüche 1 und 2, mit einer Meßbrücke (RH, RM, RK, R2) und mit einem zumindest mit einem Teil (RH) der Meßbrücke thermisch in Kontakt stehenden Strömungsmeßorgan (RS), sowie mit einer Betriebsspannungsquelle (6) zur Versorgung der Meßbrücke und des Strömungsmeßorgans, wobei das Strömungsmeßorgan (RS) durch einen Schalter (7) mit der Betriebsspannungsquelle (6) verbindbar ist, dadurch gekennzeichnet, daß zur Umwandlung der durch einen Verstärker (1) verstärkten Diagonalspannung der Meßbrücke in eine spannungsproportionale Frequenz ein Spannungs-Frequenzwandler (20) vorgesehen ist, und daß weiter zu taktweisen Verbindung des Strömungsmeßorgans (RS) mit der Betriebsspannungsquelle (6) vermittels des Schalters (7) eine den Schalter (7) betätigende, mit der Frequenz des Spannungs-Frequenzwandlers (20) angesteuerte monostabile Kippstufe (5) vorgesehen ist.

5. Schaltungsanordnung zur Durchführung des Verfahrens nach Anspruch 3, mit einer Meßbrücke (RH, RM, RK, R2) und mit einem zumindest mit einem Teil (RH) der Meßbrücke thermisch in Kontakt stehenden Strömungsmeßorgan (RS), sowie mit mindestens einer Betriebsspannungsquelle zur Versorgung der Meßbrücke und des Strömungsmeßorgans, dadurch gekennzeichnet, daß zur Umwandlung der durch einen Verstärker (1) verstärkten Diagonalspannung der Meßbrücke in eine spannungsproportionale Frequenz ein Spannungs-Frequenzwandler (20) vorgesehen ist, und daß weiter zur taktweisen Verbindung des Strömungsmeßorgans (RS) mit einer Betriebsspannungsquelle vermittels eines Schalters (S7) eine den Schalter (S7) betätigende, mit der Frequenz des Spannungs-Frequenzwandlers (20) angesteuerte monostabile Kippstufe (5) vorgesehen ist und daß weitere Mittel zur Feststellung der Höhe der Versorgungsspannung und nach Maßgabe deren Höhe Einschaltung unterschiedlicher Konstantspannungsquellen sowie umschaltbarer Zeitglieder zur Beeinflussung des Schaltverhaltens der monostabilen Kippstufe (5) vorgesehen sind.

**Revendications**

1. Procédé pour mesurer le débit d'air dans la tubulure d'aspiration (100) d'un moteur à combustion interne avec un organe de mesure de l'écoulement (RS), non sensible au sens l'écoulement, notamment un fil chaud ou un film chaud, qui est couplé thermiquement avec une branche (RH) d'un pont de mesure de résistance (RH, RM, RK, R2), l'organe (RS) de mesure de l'écoulement étant susceptible d'être relié par un commutateur (7) à une tension de service, procédé caractérisé en ce que la tension diagonale du circuit de pont est convertie, pour d'autres étapes d'exploitation, en une fréquence correspondant à cette tension, et l'organe (RS) de mesure de l'écontement étant relié, en synchronisme avec cetté fréquence, à la tension de servie (U).

2. Procédé selon la revendication 1, caractérisé en ce que la tension diagonale du pont de mesure est amplifiée, la tension ainsi amplifiée étant appliquée à un convertisseur tension-fréquence dont le signal de sortie commande un étage basculant monostable qui actionne un commutateur reliant l'organe de mesure de l'écoulement à la source de tension.

3. Procédé selon une des revendications 1 ou 2, caractérisé en ce que, pour déterminer le comportement d'enclenchement de l'étage basculant monstable, il est prévu différents organes de temporisation qui sont susceptibles d'être mis en circuit en fonction du niveau de la tension de service.

4. Dispositif de circuit pour la mise en oeuvre du procédé selon une des revendications 1 ou 2, avec un pont de mesure (RH, RM, RK R2) et avec un l'organe (RS) de mesure de l'écoulement se trouvant thermiquement en contact tout au moins avec une partie (RH) du pont de mesure, anisi qu'avec une source (6) de tension de service pour l'alimentation du pont de mesure de de l'organe de mesure de l'écoulement, cet organe (RS) de mesure de l'écoulement étant susceptible d'être relié à la source (6) de tension de service par l'intermédiaire d'un commutateur (7), dispositif caractérisé en ce que, pour convertir la tension diagonale du pont de mesure, amplifiée par un amplificateur (1), en une fréquence proportionnelle à la tension, il est prévu un convertisseur tension-fréquence (29), et qu'en outre, pour relier en synchronisme l'organe (RS) de mesure de l'écoulement à la source (6) de tension de service au moyen du commutateur (7), il est prévu un étage basculant monostable (5), commandé par la fréquence du convertisseur tension-fréquence (20), et actionnant le commutateur (7).

5. Dispositif de circuit pour la mise en oeuvre du procédé selon la revendication 3, avec un pont de mesure (RH, RM, RK, R2) et avec un organe (RS) de mesure de l'écoulement se trouvant thermiquement en contact tout au moins avec une partie (RH) du pont de mesure, ainsi qu'avec au moins un source de tension der service pour l'alimentation du pont de mesure et de l'organe de mesure de l'écoulement, dispositif caractérisé en ce que, pour convertir la tension diagonale du pont de mesure, amplifiée par un amplificateur (1), en une fréquence proportionnelle à la tension, il est prévu un convertisseur tension-fréquence (20) et qu'en outre, pour relier en synchronisme l'orange (RS) de mesure de l'ecoulement à une source de tension de service au moyen d'un commutateur (S7), il est prévu un étage basculant monostable (5) commandé par la fréquence du convertisseur tension-fréquence (20) et actionnant un des commutateurs (S7), et d'autres moyens sont prévus pour constater le niveau de la tension d'alimentation et pour mettre en circuit, selon le niveau de cette tension, différentes sources de tension constante ainsi que des organes de temporisation, susceptibles d'être commutés, pour influencer le comportement d'enclenchement de l'étage baculant monostable (5).

**Claims**

1. Method for measuring the air flow in the intake manifold (100) of an internal combustion engine with a direction-insensitive flow measuring element (RS), in particular a hot wire or a heating film, which is thermally coupled to a bridge arm (RH) of a (resistance-) measuring bridge (RH, RM, RK, R2) and the flow measuring element (RS) being connectable by a switch (7) to an operating voltage (U), characterized in that the diagonal voltage of the bridge circuit is converted for further evaluation steps into a frequency corresponding to the voltage, and in that that flow measuring element (RS) of this frequency is connected in a corresponding clocked fashion to the operating voltage (U).

2. Method according to Claim 1, characterized in that the diagonal voltage of the measuring bridge is amplified, in that the amplified voltage is fed to a voltage-frequency converter, and in that the output signal of the latter is used to control a monostable multivibrator which actuates a switch connecting the flow measuring element to the voltage source.

3. Method according to either of Claims 1 and 2, characterized in that, to determine the making behaviour of the monostable multivibrator, different timing elements are provided which can be switched in as a function of the level of the operating voltage.

4. Circuit arrangement for carrying out the method according to either of Claims 1 and 2, having a measuring bridge (RH, RM, RK, K2) and having a flow measuring element (RS) in thermal contact with at least one part (RH) of the measuring bridge, and having an operating voltage source (6) for supplying the measuring bridge and the flow measuring element, the flow measuring element (RS) being connectable by a switch (7) to the operating voltage source (6), characterized in that a voltage-frequency converter (20) is provided to convert the diagnoal voltage of the measuring bridge, amplified by an amplifier (1), into a voltage-proportional frequency, and in that a monostable multivibrator (5) which actuates the switch (7) and is controlled by the frequency of the voltage-frequency converter (20) is furthermore provided for the clocked connection of the flow measuring element (RS) to the operating voltage source (6) by means of the switch (7).

5. Circuit arrangement for carrying out the method according to Claim 3, having a measuring bridge (RH, RM, RK, R2) and having a flow measuring element (RS) in thermal contact with at least one part (RH) of the measuring bridge, and having at least one operating voltage source for supplying the measuring bridge and the flow measuring element, characterized in that a voltage-frequency converter (20) is provided to convert the diagonal voltage of the measuring bridge, amplified by an amplifier (1), into a voltage-proportional frequency, and in that a monostable multivibrator (5) which actuates the switch (S7) and is controlled by the frequency of the voltage-frequency converter (20) is furthermore provided for the clocked connection of the flow measuring element (RS) to an operating voltage source by means of a switch (7) and in that further means are provided for detecting the level of the voltage source and, depending on its level, switching in different constant voltage sources and switch-selectable timing elements for influencing the switching behaviour of the monostable multivibrator (5).

FIG.1

FIG.3

PTAKT/PANALOG

FIG. 2